# EUROPEAN PATENT SPECIFICATION

(11) **EP 1 008 488 B1**
(45) Date of publication and mention of the grant of the patent: **14.05.2003**
(21) Application number: 99124415.3
(22) Date of filing: 07.12.1999
(51) Int. Cl.: B60R 1/06

(54) **A device for the articulated fastening of an external rear-view mirror to an automobile vehicle structure**
Vorrichtung zur gelenkigen Befestigung eines Aussenrückblickspiegels an einer Kraftfahrzeugstruktur
Dispositif pour la fixation articulée d'un rétroviseur extérieur sur une structure de véhicule

(30) Priority: 09.12.1998 IT TO981030
(43) Date of publication of application: 14.06.2000
(73) Proprietor: Ficomirrors Italia S.r.l. a s.u., 10078 Venaria Reale (Torino) (IT)
(72) Inventor: Lupo, Fabrizio, 10036 Settimo Torinese (IT)
(74) Representative: Eccetto, Mauro

(56) References cited:
- EP-A- 0 531 944
- WO-A-96/14221
- DE-U- 29 621 153

## Description

The present invention relates to a device for the articulated fastening of an external rear- view mirror on an automobile vehicle structure.

Devices for the articulated fastening of rear-view mirrors on an automobile vehicle structure are known. These devices are generally of the modular type, i.e. have interchangeable modules and can be used for rear-view mirrors of different styles. These known devices conventionally comprise a fixed portion connected to the structure and a moving portion connected to the mirror and articulated about a single axis of rotation with respect to the fixed portion.

In general, both the fixed part and the moving part are made from die-cast metal. They require, moreover, other components such as resilient members and adjustment members that are also of metal. Lastly, these known devices are relatively difficult to assemble and their adjustment is generally problematic. These known devices are therefore always rather complicated and costly.

DE 29 621 153 U1 as the closest prior art discloses a joint comprising a member fixed to a vehicle and a moving member which supports an external rear-view mirror. The fixed and moving members are hinged together by means of a pin, which can be rotated with respect to the fixed member by a gear transmission, which the moving member is coupled to the pin in a reference position by two elastic arms.

The object of the invention is to provide a device for the articulated fastening of a rear-view mirror which makes it possible to reduce the number of components and the relative manufacturing costs.

According to the invention, this object is achieved by a device for the articulated fastening of an external rear-view mirror on an automobile vehicle structure, according to claim 1.

The invention is set out in further detail below with reference to an embodiment thereof, given by way of example and made with reference to the accompanying drawings, in which:
Fig. 1 is a side view of a device for the articulated fastening of a rear-view mirror of the invention;
Fig. 2 is a top view of the device of Fig. 1;
Fig. 3 is a section along the line III-III of Fig. 1;
Fig. 4 is a side view, partially in cross-section, of a first detail of the device of Fig. 1;
Fig. 5 is a view from the bottom of the detail of Fig. 4;
Fig. 6 is the cross-section of Fig. 3 through a second detail of the device of Fig. 1, in another operating position;
Fig. 7 is a cross section along the line VII-VII of Fig. 6.

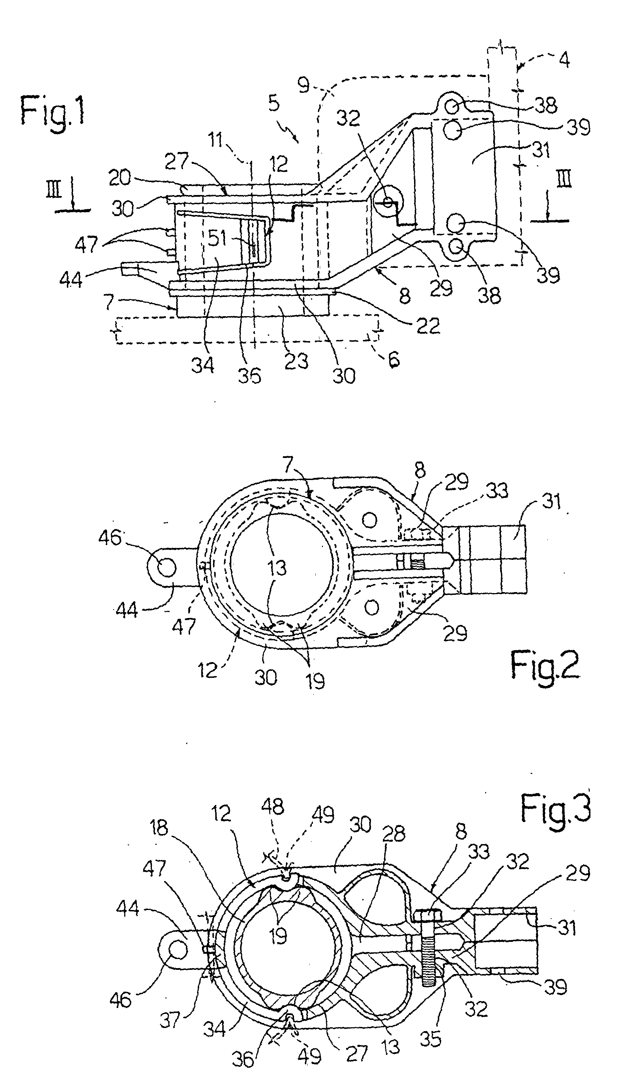

In Fig. 1, a device for the articulated fastening of a rear-view mirror 4 to an automobile vehicle structure, for instance a bracket 6, is shown overall by 5. The mirror 4 and the bracket 6 do not form part of the fastening device 5 and are shown diagrammatically in dashed lines in Fig. 1. The fastening device 5 substantially comprises a fixed tubular member 7 connected to the bracket 6 and a moving member 8 connected to a portion 9 of a support for the mirror 4 also shown in dashed lines. The moving member 8 is connected to the fixed member 7 in an articulated manner about a single axis of rotation 11.

According to the invention, the two members 7 and 8 (Fig. 2) are each made in one piece, by injection of a thermoplastic material in a corresponding mould, as a result of which their relative weight and manufacturing cost are substantially reduced. Moreover, one of the two members 7, 8 is provided with at least one elastically deformable shaped member 12 adapted to be engaged in at least one seat 13 borne by the other of the two members 7, 8, in order to define an angular reference position of the mirror 4 with respect to the fixed member 7.

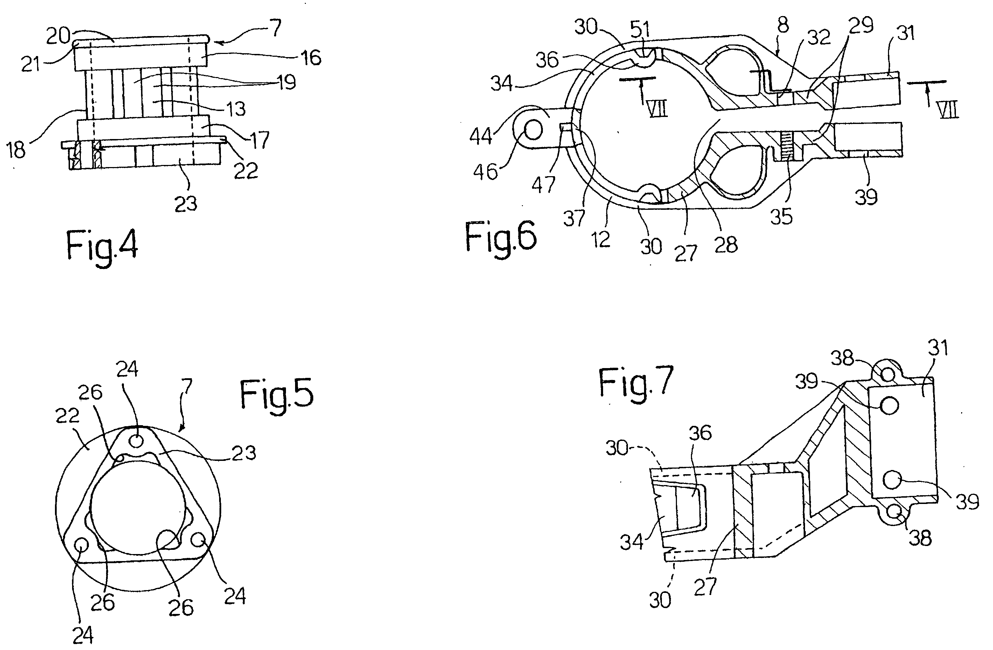

The fixed member 7 in particular comprises a cylindrical upper portion 16 (Fig. 4) and a cylindrical lower portion 17, between which an intermediate portion 18 of smaller diameter is disposed.

The portion 18 bears at least one pair of diametrically opposite seats 13 (Fig. 3), each of which is formed by an axial groove disposed between two ribs 19 (Fig. 3) of the portion 18. The fixed member 7 is further provided with two, respectively upper 20 and lower 22, flanges adjacent to the two cylindrical portions 16 and 17 and on opposite sides with respect thereto. The upper flange 20 is provided with a rounded edge 21, while the lower flange 22 is rigid with a connection base 23.

The base 23 (Fig. 5) has a substantially prismatic shape and is triangular in cross-section, with rounded corners. At each corner, the base 23 is provided with a relative inner radial depression 26 and a relative hole 24 parallel to the axis 11 for connection to the bracket 6, in a manner that is known and not described in detail.

The moving member 8 (Figs. 3 and 6) is formed by a sleeve 27 open along one of its generatrices, in order to form a slot 28. A pair of radial arms 29 start from both ends of the slot 28 in order to form a closeable clamp. The sleeve 27 is bounded at the top and the bottom by two projecting edges 30.

The arms 29 (Fig. 1) are upwardly inclined and each have at their end a box-shaped portion 31. The two portions 31 are adapted to mesh when the two arms 29 are urged against one another. One of the two arms 29 is further provided with a hole 32 (Figs. 1 and 2) in which a connection screw 33 may be engaged, while the other arm 29 is provided with a hole 35, in which the screw 33 may be screwed to connect the arms 29 and close the moving member 8.

The moving member 8 of the fastening device 5 is further provided with shaped members 12, which are adapted to bend elastically and are obtained rigidly with the sleeve 27. Each shaped member 12 is in particular formed by a curved elastic arm 34, ending in a projection 36 adapted to engage the seat 13. The two elastic arms 34 extend peripherally from a longitudinal portion 37 opposite to the slot 28 and are symmetrical to one another with respect to a median plane passing through the axis 11. The two projections 36 are diametrically opposite with respect to the axis 11.

Each arm 29 of the moving member 8 is provided with a plurality of holes for the fastening of the support 9 of the mirror 4, in a known manner that is not described in detail. In particular, each arm 29 is provided with two pairs of horizontal holes 38 and 39 (Fig. 1) which are obtained through the box-shaped portions 31.

The moving member 8 is also provided with a radial projection 44, disposed between the two elastic arms 34 and rigid with the longitudinal portion 37. The projection 44 is provided with an axial hole 46, which, with the holes 38 or 39, is used to fasten the moving member 8 to the body of the rear-view mirror.

Lastly, the longitudinal portion 37 is provided with two radial pins 47 for the positioning of a possible auxiliary spring 48 for the curved elastic arms 34. The spring 48, shown diagrammatically and partially in Fig. 3, is preferably of metal and of the * type and has a pair of facing portions 49, each of which acts on a relative outwardly flared cavity 51 of the projection 36 of the corresponding elastic arm 34.

The fastening device 5 operates as follows.

In order to mount the moving member 8 of the device 5 on the fixed member 7, the sleeve 27 is moved apart and is inserted with its edges 30 (Fig. 1) between the two flanges 20 and 22 of the fixed member 7. When the arms 29 are closed by means of the screw 33, the sleeve 27 is axially locked between the two flanges 20 and 22 which prevent it from sliding axially with respect to the fixed member 7. In this way, the sleeve 27 engages the two cylindrical portions 16 and 17, while the two elastic arms 34 engage the intermediate portion 18.

The moving member 8 is rotated on the fixed member 7 until the projections 36 of the elastic arms 34 of the moving member 8 snap-lock on the seats 13 of the fixed member 7. The bending strength of the arms 34 makes it possible to define an angular reference position of the moving member 8 and, therefore, of the rear-view mirror 4, with respect to the fixed member 7 about the axis of rotation 11 of the articulation.

When the mirror 4 suffers an impact, which overcomes the resistant couple of the elastic arms 34, the projections 36 come out of the seats 13. The driver, acting on the body of the rear-view mirror connected to the projection 46, may rotate the moving member 8 on the fixed member 7 until the projections 36 again snap-lock with the seats 13.

When the strength of the arms 34 is not sufficient to obtain the desired couple resisting the rotation of the moving member 8, in particular after a period of use, the *-shaped spring 48 (Fig. 3) may be coupled between the pins 47 of the longitudinal portion 37. The spring 48, by engaging its facing portions 49 in the cavities 51 of the projections 36, increases the resistant couple of the arms 34.

The advantages of the fastening device 5 of the invention with respect to known devices are evident from the above description. In the first place, its components are much simpler to manufacture and to assemble. Moreover, both the fixed member 7 and the moving member 8 may be each obtained as a single component by moulding of a thermoplastic material, as a result of which the device 5 is of smaller weight and cost. This material can also be readily recycled, in the case of wastage. Lastly, the fastening device 5 makes it possible to add additional elastic members, in order to regulate the couple resistant to the rotation of the moving member 8.

It will be appreciated that modifications and improvements may be made to the fastening device 5 as described without departing from the scope of the claims. For instance, the shape of the arms 29 and the position of the various connection holes could be varied. Moreover, one or more shaped members 34, 36 could be provided for positioning. Lastly, more than one seat 13 could be provided for each shaped member 34, 36.

## Claims

1. A device (5) for the articulated fastening of an external rear-view mirror (4) to a structure of an automobile vehicle, comprising a fixed member (7) adapted to be connected to the structure (6) and a moving member (8) articulated about a predetermined axis of rotation (11) on the fixed member (7); the moving member (8) being adapted to support the mirror (4) and bearing two elastically deformable shaped members (34,36), each comprising a curved arm (34) rigid with the moving member (8) and ending in a relative projection (36) snap-locking with at least one corresponding retaining seat (13) provided in the fixed member (7), in order to maintain the mirror (4) in an angular reference position with respect to the fixed member (7); the two curved arms (34) being symmetrical with respect to a plane passing through the axis of rotation (11); **characterised in that** the moving member (8) comprises a sleeve (27) which is open along one of its generatrices and is deformable in order to enable its insertion around the fixed member (7).

2. A device as claimed in claim 1, **characterised in that** the fixed member (7) is hollow and comprises two cylindrical portions (16, 17), between which there is disposed an intermediate portion (18) of smaller diameter, each of the retaining seats being formed by an axial groove (13) disposed between two ribs (19) of this intermediate portion (18).

3. A device as claimed in claim 2, **characterised in that** the fixed member (7) further comprises a substantially prismatic base (23) provided with a plurality of passages (24) for connection to the structure (6), each passage (24) being disposed at the location of each corner of this base (23).

4. A device as claimed in ciaim 2 or 3, **characterised in that** said cylindrical portions (16, 17) support the sleeve (27) of the moving member (8) in a rotary manner.

5. A device as claimed in claim 4, **characterised in that** the fixed member (7) is provided with two flanges (20, 22) adjacent to the cylindrical portions (16, 17), the sleeve (27) being formed by two edges (30) adapted to be disposed between these flanges (20, 22) in order to prevent the axial sliding of the moving member (8) with respect to the fixed member (7).

6. A device as claimed in anyone of the preceding claims **characterised in that** the sleeve (27) open along said one generatrice forms a slot (28), two radial arms (29) being obtained rigidly with the sleeve (27) at the location of this slot (28) in order to enable the locking of the sleeve (27).

7. A device as claimed in claim 6, **characterised in that** the two radial arms (29) terminate with two ends (31) that mesh when the two radial arms (29) are urged against one another.

8. A device as claimed in claim 6 or 7, **characterised in that** each of the radial arms (29) is provided with a plurality of holes (38, 39) for fastening the moving member (8) to a support (9) of the mirror (4).

9. A device as claimed in one of the preceding claims, **characterised in that** the fixed member (7) and the moving member (8) are each made of a single piece of thermoplastic material.

10. A device as claimed in anyone of the preceding claims, **characterized in that** it comprises an auxiliary spring (48) coupled to said curved arms (34).

## Patentansprüche

1. Vorrichtung (5) zum gelenkigen Befestigen eines Außenrückblickspiegels (4) an einer Struktur eines Kraftfahrzeugs, umfassend ein befestigtes Element (7), welches darauf angepaßt ist, an die Struktur (6) befestigt zu werden, und ein bewegliches Element (8), welches um eine vorbestimmte Rotationsachse (11) herum gelenkig mit dem befestigten Element (7) verbunden ist; wobei das bewegliche Element (8) so angepaßt ist, daß es den Spiegel (4) trägt, und welches zwei elastisch deformierbare, geformte Elemente (34, 36) trägt, von denen jedes einen gebogenen Arm (34) aufweist, welcher gegenüber dem beweglichen Element (8) fest ist und in einem relativen Vorsprung (36) endet, der wenigstens in einem entsprechenden Haltesitz (13) einschnappt, der im befestigten Element (7) ausgestaltet ist, um den Spiegel (4) in bezug auf das befestigte Element (7) in einer winkligen Bezugsposition zu halten; wobei die beiden gebogenen Arme (34) symmetrisch in bezug auf eine Ebene sind, die durch die Rotationsachse (11) läuft; **dadurch gekennzeichnet, daß** das bewegliche Element (8) ein Rohr (27) umfaßt, welches entlang eines seiner Generatrices offen ist und deformierbar ist, um sein Einführen um das befestigte Element (7) herum zu gestatten.

2. Vorrichtung wie im Anspruch 1 beansprucht, **dadurch gekennzeichnet, daß** das befestigte Element (7) hohl ist und zwei zylindrische Abschnitte (16, 17) aufweist, zwischen denen ein Zwischenabschnitt (18) kleineren Durchmessers vorgesehen ist, wobei jeder der Haltesitze durch eine axiale Rille (13) gebildet ist, die zwischen zwei Rippen (19) dieses Zwischenabschnitts (18) ausgestaltet ist.

3. Vorrichtung wie im Anspruch 2 beansprucht, **dadurch gekennzeichnet, daß** das befestigte Element (7) ferner eine im wesentlichen prismatische Basis (23) umfaßt, die mit einer Vielzahl von Durchgängen (24) zum Verbinden an die Struktur (6) ausgestattet ist, wobei jeder Durchgang (24) am Ort jeder Ecke dieser Basis (23) angeordnet ist.

4. Vorrichtung wie im Anspruch 2 oder 3 beansprucht, **dadurch gekennzeichnet, daß** die zylindrischen Abschnitte (16, 17) das Rohr (27) des beweglichen Elements (8) rotierbar tragen.

5. Vorrichtung wie im Anspruch 4 beansprucht, **dadurch gekennzeichnet, daß** das feste Element (7) mit zwei Flanschen (20, 22) neben den zylindrischen Abschnitten (16, 17) ausgestattet ist, wobei das Rohr (27) mit zwei Kanten (30) gebildet ist, die so gepaßt sind, daß sie zwischen diesen Flanschen (20; 22) angeordnet sind, um das axiale Gleiten des beweglichen Elements (8) in bezug auf das feste Element (7) zu verhindern.

6. Vorrichtung wie in irgendeinem der vorangehenden Anspruche beansprucht, **dadurch gekennzeichnet, daß** das Rohr (27), welches im Verlauf einer Generatrix offen ist, einen Schlitz (28) bildet, wobei zwei radiale Arme (29) am Ort dieses Schlitzes (28) fest mit dem Rohr (27) verbunden erhalten werden, um das Verschließen des Rohrs (27) zu gestatten.

7. Vorrichtung wie im Anspruch 6 beansprucht, **dadurch gekennzeichnet; daß** die beiden radialen Arme (29) mit zwei Enden (31) abschließen, die ineinandergreifen, wenn die beiden radialen Arme (29) aneinander gedrängt werden.

8. Vorrichtung wie im Anspruch 6 oder 7 beansprucht, **dadurch gekennzeichnet, daß** jeder der radialen Arme (29) mit einer Vielzahl von Löchern (38, 39) ausgestattet ist zum Befestigen des beweglichen Elements (8) an einen Träger (9) des Spiegels (4).

9. Vorrichtung wie in einem der vorangehenden Ansprüche beansprucht, **dadurch gekennzeichnet, daß** das feste Element (7) und das bewegliche Element (8) jeweils aus einem einzelnen Stück eines thermoplastischen Materials gefertigt ist.

10. Vorrichtung wie in irgendeinem der vorangehenden Ansprüche beansprucht, **dadurch gekennzeichnet, daß** sie eine Hilfsfeder (28) umfaßt, die mit den gebogenen Armen (34) gekoppelt ist.

## Revendications

1. Dispositif (5) pour la fixation articulée d'un rétroviseur extérieur (4) sur une structure de véhicule automobile, composé d'une partie fixe (7) conçue pour être reliée à la structure (6), et d'une partie mobile (8) articulée sur ladite partie fixe (7), autour d'un axe de rotation (11) prédéterminé ; la partie mobile (8) étant destinée à supporter le rétroviseur (4), et portant deux pièces profilées (34, 36) élastiquement déformables, dont chacune comprend un bras curviligne (34) faisant corps avec la partie mobile (8) et s'achevant par une protubérance respective (36) se verrouillant, par déclic, avec au moins un logement correspondant de retenue (13) prévu dans la partie fixe (7), de façon à maintenir le rétroviseur (4) dans une position angulaire de référence vis-à-vis de ladite partie fixe (7) ; les deux bras curvilignes (34) étant symétriques par rapport à un plan passant par l'axe de rotation (11) ; **caractérisé par le fait que** la partie mobile (8) comprend une douille (27) qui est ouverte le long de l'une de ses génératrices, et est déformable en vue de permettre son insertion autour de la partie fixe (7).

2. Dispositif selon la revendication 1, **caractérisé par le fait que** la partie fixe (7) est creuse, et comprend deux régions cylindriques (16, 17) entre lesquelles se trouve une région intermédiaire (18) de diamètre plus petit, chacun des logements de retenue revêtant la forme d'une saignée axiale (13) interposée entre deux lobes (19) de cette région intermédiaire (18).

3. Dispositif selon la revendication 2, **caractérisé par le fait que** la partie fixe (7) comprend, en outre, une embase (23) sensiblement prismatique, munie d'une pluralité de passages (24) en vue de la liaison avec la structure (6), chaque passage (24) étant situé à l'emplacement de chaque coin de cette embase (23).

4. Dispositif selon la revendication 2 ou 3, **caractérisé par le fait que** lesdites régions cylindriques (16, 17) supportent, de manière rotative, la douille (27) de la partie mobile (8).

5. Dispositif selon la revendication 4, **caractérisé par le fait que** la partie fixe (7) est pourvue de deux ailes (20, 22) adjacentes aux régions cylindriques (16, 17), la douille (27) étant formée par deux bords (30) destinés à être interposés entre ces ailes (20, 22), en vue d'empêcher le glissement axial de la partie mobile (8) vis-à-vis de la partie fixe (7).

6. Dispositif selon l'une quelconque des revendications précédentes, **caractérisé par le fait que** la douille (27), ouverte le long de l'une précitée des génératrices, forme une fente (28), deux bras radiaux (29) faisant corps avec la douille (27) à l'emplacement de cette fente (28), afin de permettre le verrouillage de ladite douille (27).

7. Dispositif selon la revendication 6, **caractérisé par le fait que** les deux bras radiaux (29) s'achèvent par deux extrémités (31) qui coopèrent mutuellement lorsque les deux bras radiaux (29) sont poussés l'un contre l'autre.

8. Dispositif selon la revendication 6 ou 7, **caractérisé par le fait que** chacun des bras radiaux (29) est muni d'une pluralité de trous (38, 39), en vue de fixer la partie mobile (8) à un support (9) du rétroviseur (4).

9. Dispositif selon l'une des revendications précédentes, **caractérisé par le fait que** la partie fixe (7) et la partie mobile (8) se présentent, chacune, comme une pièce monobloc en une matière thermoplastique.

10. Dispositif selon l'une quelconque des revendications précédentes, **caractérisé par le fait qu'**il comporte un ressort auxiliaire (48) relié auxdits bras curvilignes (34).
